# NEUE EUROPÄISCHE PATENTSCHRIFT

(11) **EP 2 671 649 B2**
(45) Veröffentlichungstag und Bekanntmachung des Hinweises auf die Entscheidung über den Einspruch: **01.11.2017**
(45) Hinweis auf die Patenterteilung: 19.11.2014
(21) Anmeldenummer: 13168951.5
(22) Anmeldetag: 23.05.2013
(51) Int. Cl.: B07C 5/12, B07C 5/342, G01N 21/90

(54) **Vorrichtung zur Identifizierung einer Flasche**
Apparatus for identifying a bottle
Dispositif d'identification d'une bouteille

(30) Priorität: 04.06.2012 DE 102012010925
(43) Veröffentlichungstag der Anmeldung: 11.12.2013
(73) Patentinhaber: Vision-tec GmbH, 34277 Fuldabrück (DE)
(72) Erfinder:
(74) Vertreter: Schneider, Peter Christian

(56) Entgegenhaltungen:
- EP-A1- 0 045 407
- DE-A1- 3 839 682
- DE-C3- 1 797 110
- US-A- 2 943 531
- US-A- 3 708 680

## Beschreibung

### Gebiet der Erfindung

Die Erfindung bezieht sich auf eine Vorrichtung zur Identifizierung einer Flasche, die an einer nach räumlicher Position und axialer Ausrichtung vorgegebenen Flascheninspektionsstelle positionierbar ist, umfassend
- eine der Flascheninspektionsstelle zugeordnete Beleuchtungseinheit, welche die Flascheninspektionsstelle durch eine koaxial zu dieser angeordnete Blendenanordnung hindurch flaschenbodenseitig beleuchtet,
- wenigstens einen flaschenmündungsseitig der Flascheninspektionsstelle angeordneten Bilddetektor, mittels dessen ein eine Draufsicht auf die Flascheninspektionsstelle repräsentierendes Bild aufnehmbar ist, und
- eine Bildverarbeitungseinheit, die eingerichtet ist, durch Vergleich von Bildinformationsinhalten des Bildes mit gespeicherten Werten eine Kategorisierung der Flascheninspektionsstelle oder - falls vorhanden - einer dort positionierten Flasche nach vorgegebenen Kriterien vorzunehmen.

### Stand der Technik

Derartige Flaschenidentifizierungsvorrichtungen sind bekannt aus der DE 38 39 682 A1.

Im Bereich der Leergutlogistik, insbesondere für die Getränkeindustrie, ist es erforderlich, unterschiedliche Flaschentypen automatisiert nach unterschiedlichen Kriterien, wie beispielsweise Flaschengeometrie, Flaschenfarbe, Etiketten etc. zu kategorisieren. Eine solche Kategorisierung nach den genannten oder anderen Kriterien wird hier als Identifizierung angesprochen. Die Identifizierung ist erforderlich, um die Flaschen entsprechend zu sortieren und unterschiedlichen Reinigungs- und/oder Abfüllbetrieben zuleiten zu können.

Ein wesentliches Problem bei der Identifizierung ist, dass Flaschenleergut typischerweise in Flaschenkästen mit jeweils einer Mehrzahl von Flaschen, typischerweise 12, 20 oder 24 Flaschen anfällt, wobei die Kästen häufig nicht vollständig und/oder nicht einheitlich befüllt sind. Eine optische Inspektion wird dabei durch die schwierige optische Zugänglichkeit der Flaschen im Kasten erschwert. Andererseits nimmt in jüngster Zeit die Bandbreite unterschiedlicher Flaschentypen erheblich zu, sodass die Kategorisierung nach immer mehr Kriterien und immer feiner zu erfolgen hat.

Aus der DE 10 2004 049 260 A1 ist eine Vorrichtung bekannt, bei der Flaschen kastenweise an vorgegebene Flascheninspektionsstellen transportiert werden. Als Flascheninspektionsstelle wird hier eine räumliche Position bezeichnet, an der eine Flasche in einer vorgegebenen axialen Ausrichtung zum Zwecke der Untersuchung und Identifizierung positionierbar ist. Obgleich die Flascheninspektionsstelle unabhängig davon existiert, ob zu einem gegebenen Zeitpunkt an ihr eine Flasche positioniert ist oder nicht, finden im Rahmen dieser Beschreibung eigentlich auf die bestimmungsgemäß angeordnete Flasche bezogene Ausdrücke, wie beispielsweise "flaschenmündungsseitig" oder "flaschenbodenseitig", auch in Bezug auf die Flascheninspektionsstelle selbst Anwendung.

Flaschenmündungsseitig, bei dem genannten Stand der Technik insbesondere oberhalb der Flascheninspektionsstelle, ist eine Kamera angeordnet, welche das Bild einer Draufsicht auf den gesamten Kasten, d.h. auf sämtliche Flascheninspektionsstellen gemeinsam, liefert. In einer solchen Draufsicht sichtbar sind insbesondere die Mündungsringe und die Schultern von an den Flascheninspektionsstellen positionierten Flaschen sowie ggf. leere Flascheninspektionsstellen. Mit einer geeigneten Bildverarbeitungseinheit kann ein solches Bild ausgewertet werden, sodass eine Kategorisierung beispielsweise nach Vorhandensein einer Flasche an einer bestimmten Flascheninspektionsstelle, Farbe, Schulterbreite, Mündungsdurchmesser, Vorhandensein eines Deckels etc. vorgenommen werden kann. Von offensichtlicher Bedeutung ist dabei die Bildqualität, die insbesondere eine geeignete Beleuchtung der Flascheninspektionsstellen voraussetzt.

In der genannten Druckschrift wird eine exakt flaschenmündungsseitige Beleuchtung aufgrund der erzeugten Reflexe als nicht hinreichend beschrieben. Es wird daher vorgeschlagen, die Flaschen zusätzlich mit einem schräg von oben einfallenden Licht so zu beleuchten, dass Reflexionen vermieden werden und stattdessen Streulicht entsteht, welches von der Kamera aufgefangen werden kann. Nachteilig bei dieser Art der Beleuchtung ist, dass der Beleuchtungsgrad jeder einzelnen Flasche stark von ihrer Position im Kasten abhängt, was die nachfolgende Bildauswertung erheblich erschwert.

Aus der DE 10 2007 008 619 A1 ist eine Vorrichtung bekannt, bei der jeder Flascheninspektionsstelle eine eigene, flaschenmündungsseitig angeordnete Kamera zugeordnet ist. Die Beobachtung jeder Flascheninspektionsstelle erfolgt durch eine Bikonvexlinse mit einem Linsendurchmesser, der größer ist als der Flaschendurchmesser jeder bestimmungsgemäß identifizierbaren Flasche, d.h. jeder Flasche, für deren Identifizierung die Vorrichtung eingerichtet und bestimmt ist. Die Beleuchtung der Flascheninspektionsstellen erfolgt durch einen Leuchtenring, der den Linsenumfang umgibt. Aufgrund des großen Bauraumbedarfs müssen diese Beleuchtungs-/Aufnahmeeinheiten versetzt zueinander angeordnet sein, sodass nicht alle Flaschen in einem Kasten gleichzeitig inspiziert werden können. Vielmehr wird der Kasten nacheinander an unterschiedliche Flaschenkasteninspektionsstellen verfahren, in denen jeweils nur eines oder einige seiner Flaschenfächer mit Flascheninspektionsstellen zusammenfallen, d.h. exakt unter den Beleuchtungs-/Aufnahmeeinheiten positioniert sind. Mit einer solchen Vorrichtung ist es möglich, nacheinander alle Flascheninspektionsstellen gleichmäßig zu beleuchten und aufgrund der Optik einen größeren Bereich der Flaschenschultern abzubilden. Gleichwohl hat die Praxis gezeigt, dass die Beleuchtung für eine empfindliche Kategorisierung nicht hinreichend ist. Dies trifft insbesondere bei stark verschmutzten Flaschen oder Flaschen aus dunkeltransparentem Material zu.

Aus der EP 0 045 407 A1 ist eine Vorrichtung zur Identifizierung von Flaschen, insbesondere nach dem Kriterium ihres Verschmutzungsgrades, bekannt, bei welchem die Flaschen einzeln einer Flascheninspektionsstelle zugeführt und dort von unten, d.h. von flaschenbodenseitig her, von einer dort angeordneten Beleuchtungseinheit beleuchtet werden. Die Beleuchtung erfolgt nicht direkt, sondern durch eine koaxiale Blendenanordnung hindurch, die als ihr wesentliches Element eine zentrale, lichtundurchlässige Kreisscheibe aufweist. Mittels dieser Kreisscheibenblende wird jegliches Licht, das unmittelbar von der Beleuchtungseinheit auf den Flaschenboden fallen könnte, ausgeblendet. Die genannte Druckschrift offenbart Ausführungsformen mit unterschiedlich komplexer weiterer Ausgestaltung der Blendenanordnung. Allen Ausführungsformen gemeinsam ist jedoch, dass das Licht der Beleuchtungseinheit ausschließlich auf indirektem Weg, insbesondere über diverse Reflektoren und Streuflächen, zur Flascheninspektionsstelle gelangt. Nachteilig bei dieser Anordnung ist der hohe Lichtverlust, der durch das Ausblenden des zentralen Lichtbündels entsteht, sowie die diffuse Beleuchtung des Flascheninnenraums, die insbesondere keine gute Erkennung von Brandings auf der Flaschenschulter erlaubt.

Auch die DE 1 797 110 C offenbart eine Vorrichtung zur Identifizierung von Flaschen mit flaschenbodenseitiger Beleuchtung ohne dass Details des Beleuchtungsstrahlenganges angegeben würden.

Aus der eingangs genannten, gattungsbildenden DE 38 39 682 A1 ist Flaschenbodenprüfgerät mit flaschenbodenseitiger Beleuchtung bekannt, bei der die Beleuchtung durch eine Ringblende mit axial zueinander versetzten Innen- und Außenteilen erfolgt, sodass wie beim Gegenstand der gattungsbildenden Druckschrift ein von der Beleuchtungseinheit stammendes Kernlichtbündel von dem lichtundurchlässigen Innenteil der Ringblende abgeblockt wird.

### Aufgabenstellung

Es ist die Aufgabe der vorliegenden Erfindung, eine gattungsgemäße Vorrichtung derart weiterzubilden, dass eine feinere Kategorisierung zur Identifizierung von Flaschen ermöglicht wird.

Diese Aufgabe wird durch eine Vorrichtung mit den Merkmalen von Anspruch 1 gelöst, d.h. durch eine Vorrichtung zur Identifizierung von in einem zu vorgegebenen Kasteninspektionsstellen transportierbaren Flaschenkasten angeordneten Flaschen, die dadurch an nach räumlicher Position und axialer Ausrichtung vorgegebenen Flascheninspektionsstellen positionierbar sind, umfassend
- je eine jeder Flascheninspektionsstelle zugeordnete Beleuchtungseinheit, welche die jeweilige Flascheninspektionsstelle durch jeweils eine koaxial zu dieser angeordnete, gleichartige Kreisblende, die von der zugeordneten Beleuchtungseinheit stammendes Licht eines Kernstrahlbündels, das nicht größer ist als der Durchmesser jeder bestimmungsgemäß identifizierbaren Flasche, passieren lässt und Licht außerhalb des Kernstrahlbündels ausblendet, hindurch flaschenbodenseitig beleuchtet,
- jeweils einen flaschenmündungsseitig jeder Flascheninspektionsstelle angeordneten Bilddetektor, mittels dessen ein eine Draufsicht auf die jeweilige Flascheninspektionsstelle repräsentierendes Bild aufnehmbar ist, und
- eine Bildverarbeitungseinheit, die eingerichtet ist, durch Vergleich von Bildinformationsinhalten jedes Bildes mit gespeicherten Werten eine Kategorisierung der jeweiligen Flascheninspektionsstelle oder - falls vorhanden - einer dort positionierten Flasche nach vorgegebenen Kriterien vorzunehmen,
wobei für jede Flaschenreihe des Flaschenkastens in dessen Transportrichtung eine Flascheninspektionsstelle vorgesehen ist und die Flascheninspektionsstellen zueinander derart versetzt angeordnet sind, dass niemals zwei unmittelbar nebeneinander stehende Flaschen gleichzeitig inspizierbar sind.

### Darlegung der Erfindung

Die Erfindung greift das grundsätzlich bekannte Prinzip einer Beleuchtung der Flasche von "unten", d.h. durch den Flaschenboden hindurch, auf, modifiziert dieses aber so, dass, das durch den Flaschenboden einfallende Licht von innen auf die Flaschenschultern fällt und diese durchstrahlt, wobei deren Konturen und insbesondere im Bereich der Flaschenschultern aufgebrachte Strukturen, sogenannte Brandings, für einen oberhalb der Flasche angeordneten Bilddetektor deutlich erkennbar werden. Vor allem die dreidimensionalen Strukturen von Brandings erscheinen deutlich nachgezeichnet und sind so für Bildverarbeitungssysteme besonders leicht zu erkennen. Auch Farben des Flaschenmaterials kommen durch diese Art der Beleuchtung deutlich zur Geltung. Es ist offensichtlich, dass die Erfindung hinreichend transparente Flaschen verlangt, was bei den handelsüblichen Glas- und Kunststoffflaschen jedoch ohne weiteres gegeben ist. Welcher Grad von Transparenz für die Anwendung der vorliegenden Erfindung hinreichend ist, lässt sich nicht als Absolutangabe beziffern. Hier spielen die Sensitivität des Bilddetektors sowie die Stärke der Beleuchtungseinheit eine wesentliche Rolle, sind jedoch vom Fachmann in Ansehung des Einzelfalles ohne weiteres anpassbar.

Im Rahmen der der erfindungsgemäßen Beleuchtung gilt es insbesondere zu vermeiden, dass außer dem Licht, welches das Flascheninnere passiert, Licht, welches außerhalb der Flasche an dieser vorbeistreicht, direkt auf den Bilddetektor fällt. Aufgrund der begrenzten Dynamik handelsüblicher Bilddetektoren, z.B. CCD-Kameras, würde dies zu einem Überstrahlen des Bildes führen, sodass nur die Projektion der Flasche scherenschnittartig abgebildet würde. Die für die Kategorisierung wesentliche Information, die von dem Licht, welches das Flascheninnere passiert, transportiert wird, ginge dabei verloren. Erfindungsgemäß ist daher vorgesehen, dass jeder Flascheninspektionsstelle eine koaxiale Kreisblende zugeordnet ist, die Licht außerhalb eines Kernstrahlenbündels, dessen Durchmesser nicht größer ist als der Durchmesser jeder bestimmungsgemäß identifizierbaren Flasche, ausblendet. Mit anderen Worten trifft sämtliches Beleuchtungslicht, welches von der Kreisblende nicht ausgeblendet wird, auf den Flaschenboden und erzeugt den oben erläuterten Effekt. Im Fall, dass keine Flasche vorhanden ist, d.h. die entsprechende Flascheninspektionsstelle leer ist, wird dies durch Direkteinfall des Beleuchtungslichtes auf den Bilddetektor ohne Schwierigkeiten erkannt. Nachteile durch das resultierende Überstrahlen ergeben sich nicht, da im Fall einer abwesenden Flasche keine Details erkannt werden müssen.

Bevorzugt ist der Kreisblendendurchmesser 0%-20% kleiner als der Durchmesser jeder bestimmungsgemäß identifizierbaren Flasche. 0%, d.h. Gleichheit von Flaschendurchmesser und Kreisblendendurchmesser ist mindestens erforderlich, um einen Direkteinfall von Beleuchtungslicht neben der Flasche auf dem Bilddetektor zu vermeiden. Diese Wahl des Kreisblendendurchmessers erfordert jedoch eine sehr genaue Positionierung der Flasche an der Flascheninspektionsstelle. Ein Unterschied von 20% lässt eine erhebliche Toleranz bei der Flaschenpositionierung zu, schränkt jedoch das insgesamt verfügbare Licht bereits deutlich ein. In der Regel wird der Durchmesserunterschied daher zwischen diesen beiden Werten liegen.

Bei einer Weiterbildung der Erfindung ist vorgesehen, dass der Kreisblendendurchmesser einstellbar, bevorzugt automatisch einstellbar ist. Denkbar wäre eine steuerbare Blende, die sich bei jeder Inspektion optimal auf die jeweils zu identifizierende Flasche einstellt. Die Steuerung dieser Einstellung kann über den Bilddetektor erfolgen. Allerdings ist mit einer solchen Durchmessereinstellung ein nicht unerheblicher Zeitaufwand verbunden, weshalb diese Weiterbildung wohl in erster Linie für die Nachinspektion in Einzelfällen besonders schwieriger Kategorisierung Anwendung finden wird.

Bei einer bevorzugten Ausführungsform ist vorgesehen, dass die Beleuchtungseinheit eine Mehrzahl ringförmig angeordneter Leuchtmittel aufweist. Diese erzeugen bevorzugt jeweils einen schräg nach radial innen geneigten Strahlungskegel. Mit einer solchen Anordnung kann erreicht werden, dass die Innenseiten der Flaschenschultern vollumfänglich und besonders intensiv beleuchtet werden. Eine solche gezielte Beleuchtung erlaubt eine schwächere Auslegung der Leuchtmittel und entsprechende Energieersparnis im Vergleich zu einer zentralen oder diffusen Beleuchtung. Zudem wird die Innenbeleuchtung der Flaschenmündung reduziert, sodass Helligkeitsunterschiede zwischen dem Mündungsbereich und den Schulterbereichen, die sich aus unterschiedlichen Anzahlen von Passagen durch das Flaschenmaterial ergeben, reduziert werden.

Als geeignete und besonders wirtschaftliche Leuchtmittel haben sich LEDs erwiesen, sodass bei einer bevorzugten Ausgestaltung der Erfindung vorgesehen ist, dass die Beleuchtungseinheit als LEDs ausgebildete Leuchtmittel aufweist.

Bis hierher konzentrierte sich die Beschreibung der Erfindung auf die Inspektion einzelner Flaschen. Im Rahmen der Leergutlogistik erfolgt der Transport jedoch in der Regel kastenweise.

Bei der Erfindung ist daher vorgesehen, dass die Kreisblende Bestandteil einer Kreisblendenanordnung ist, innerhalb derer mehrere gleichartige Kreisblenden angeordnet sind, entsprechend einer Mehrzahl von Flascheninspektionsstellen, welche durch die Geometrie eines an vorgegebenen Kasteninspektionsstellen positionierbaren Flaschenkastens bestimmt sind. Die Erfindung ist also auch im Zusammenhang mit herkömmlichen Flaschensortierungsmaschinen verwendbar. Selbstverständlich müssen die Flaschenkästen einen lichtdurchlässigen Boden aufweisen. Dies ist jedoch üblicherweise der Fall, da handelsübliche Flaschenkästen aus Kunststoff einen aus dünnen Streben bestehenden Boden aufweisen, durch den das Beleuchtungslicht quasi ungehindert eintreten kann.

Die Anzahl und Anordnung der Kreisblenden innerhalb der Kreisblendenanordnung hängt von der Geometrie der verwendeten Kästen und dem verwendeten Detektionssystem ab.

Bei der Erfindung ist vorgesehen, dass jeder Flascheninspektionsstelle ein eigener Bilddetektor zugeordnet ist. Hieraus wird in der Regel folgen, dass aus Bauraumgründen nicht sämtliche Flaschen gleichzeitig inspiziert werden können, d.h. einer Kasteninspektionsstelle sind nicht so viele Flascheninspektionsstellen zugeordnet, wie der Kasten Flaschenfächer aufweist. Vielmehr sind mehrere Kasteninspektionsstellen vorgesehen, die nacheinander angefahren werden, wobei die Bilddetektoren versetzt angeordnet sind, sodass in jeder Kasteninspektionsstelle nur eines oder einige der Flaschenfächer mit Flascheninspektionsstellen zusammenfallen.

Nicht nur im Fall, dass die oben erläuterte, bevorzugte Ausführungsform der ringförmigen Ausgestaltung der Beleuchtungseinheit gewählt wird, versteht es sich, dass jeder Flascheninspektionsstelle eine eigene Beleuchtungseinheit zugeordnet ist. Selbstverständlich können Gedanken der vorliegenden Erfindung, insbesondere im Hinblick auf die Anordnung der Beleuchtungseinheiten, mit Elementen bekannter Vorrichtungen kombiniert werden, sodass zusätzlich zu der erfindungsgemäßen Beleuchtung weitere Beleuchtungen von oben, von der Seite oder auf sonstige Weise eingesetzt werden.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung einer bevorzugten Ausführungsform der Erfindung im Einzelflaschenbetrieb,
- Figur 2:: eine schematische Darstellung einer Erweiterung der Ausführungsform von Figur 1 für den Kastenbetrieb,
- Figur 3:: eine Skizze zur Veranschaulichung der räumlichen Anordnung von Beleuchtungseinheiten und Detektoren der Ausführungsform von Figur 2.

### Beschreibung bevorzugter Ausführungsformen

Gleiche Bezugszeichen in den Figuren deuten auf gleiche oder analoge Elemente hin.

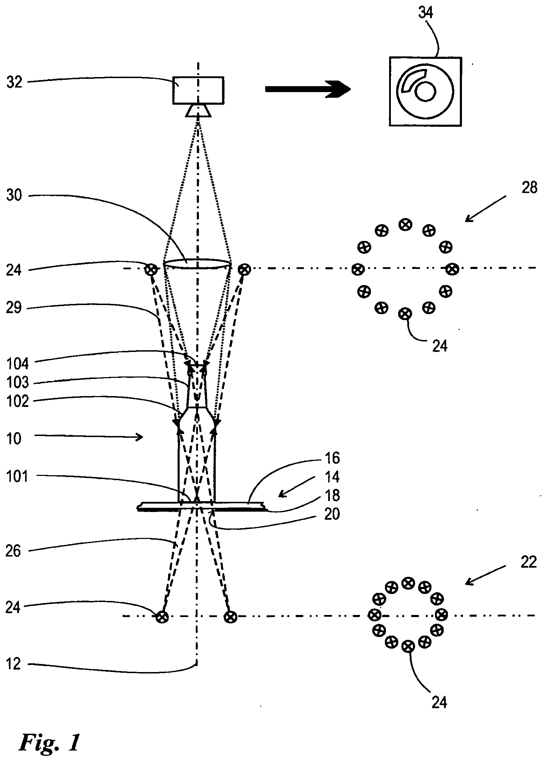

Figur 1 zeigt eine schematische Darstellung einer bevorzugten Ausführungsform der Erfindung, eingerichtet für den Einzelflaschenbetrieb. Mittels einer nicht dargestellten Fördereinrichtung wird eine Flasche 10 zu ihrer Flascheninspektionsstelle, die in Figur 1 durch die strichpunktierte optische Achse 12 markiert ist, transportiert. Grundsätzlich kann jede Art von Fördereinrichtung Verwendung finden. Besonders bevorzugt wird jedoch die Ausgestaltung der Fördereinrichtung als Klemmförderer, bei dem die Flasche 10 zwischen zwei seitlich ansetzenden Förderbändern geklemmt und transportiert wird. Diese Art der Fördereinrichtung hat gegenüber einer Förderung mittels herkömmlichen Laufbandes, auf welchem die Flasche mit ihrem Boden aufsteht, den Vorteil, dass der Flaschenboden ohne weiteres optisch zugänglich ist, was für die vorliegende Erfindung von besonderer Bedeutung ist.

Die Flascheninspektionsstelle befindet sich im Bereich eines Inspektionstisches 14, der bei der bevorzugten Ausführungsform aus einer transparenten Glasplatte 16 besteht, die auf einer Seite, vorzugsweise ihrer Unterseite, mit einer optisch undurchlässigen Beschichtung 18 versehen ist, in welche im Bereich der Flascheninspektionsstelle eine Ausnehmung 20 eingebracht ist. Im Zentralbereich der Flascheninspektionsstelle ist der Inspektionstisch somit transparent; außerhalb lichtundurchlässig. Selbstverständlich ist es auch möglich, den Inspektionstisch 16 als intransparente Platte, beispielsweise aus Metall, zu gestalten, in die an der Flascheninspektionsstelle ein Durchbruch eingearbeitet ist. Durch diesen Durchbruch kann jedoch Schmutz, insbesondere in Form von Abwässern oder Getränkeresten zu der weiter unten erläuterten unteren Beleuchtungseinheit 22 durchdringen, sodass die oben erläuterte Variante eines geschlossenen Inspektionstisches 14 bevorzugt ist.

Unterhalb der Flascheninspektionsstelle ist eine untere Beleuchtungseinheit 22 angeordnet, die aus einer Mehrzahl ringförmig angeordneter LEDs 24 besteht. Wie bei LEDs allgemein üblich, sind diese mit einer das Leuchtelement kapselnden Optik versehen, die bevorzugt, wie in Figur 1 dargestellt, einen nach oben gerichteten, und schräg nach radial innen geneigten, unteren Beleuchtungskegel 26 erzeugt. Der Beleuchtungskegel 26 ist insbesondere so ausgerichtet, dass er die Ausnehmung 20 in der lichtundurchlässigen Beschichtung 18 des Inspektionstisches 16 durchdringen und auf den Boden der exakt darüber stehenden Flasche 10 fällt. Abgesehen von den unvermeidlichen Absorptions- und Streuverlusten, deren Ausmaß von dem speziellen Flaschenmaterial abhängt, durchdringen die Lichtkegel 26 den Flaschenboden 101 und fallen auf die Innenseiten der Schultern 102 der Flasche 10. Dort werden sie teils gebrochen, teils gestreut und erzeugen dort einen optischen Effekt, der als inneres Leuchten der Flasche beschrieben werden kann. Dieses ist von außen, insbesondere von oberhalb der Flasche sehr gut erkennbar. Insbesondere zeichnen sich Strukturen, wie Konturen des Flaschenhalses 103 oder auf den Flaschenschultern 102 aufgebrachte Brandings sehr deutlich ab.

Bei der in Figur 1 dargestellten, besonders bevorzugten Ausführungsform ist oberhalb der Flasche zusätzlich eine obere Beleuchtungseinheit 28 angeordnet, die, ähnlich wie die untere Beleuchtungseinheit 22, aus einer Mehrzahl ringförmig angeordneter LEDs 24 besteht. Im Zentrum des LED-Rings der oberen Beleuchtungseinheit 28 ist eine Abbildungslinse 30, insbesondere eine Bikonvexlinse angeordnet, die die Schultern 102 der Flasche 10 "optisch anhebt", sodass sie auf von einem oberhalb der Linse 30 angeordneten Bilddetektor 32 erzeugten Bildern besonders gut erkennbar sind. Die LEDs 24 der oberen Beleuchtungseinheit 28 erzeugen nach unten gerichtete und nach radial innen geneigte Beleuchtungskegel 29, die auf die Flaschenmündung sowie die Außenseiten von Flaschenschultern 102 und Flaschenhals 103 gerichtet sind. Die Intensitäten der beiden Beleuchtungseinheiten 22 und 28 sind so aufeinander abzustimmen, dass sich eine möglichst homogene Beleuchtung des oberen Flaschenbereichs ergibt.

Der so ausgeleuchtet Bereich lässt sich in sehr guter Qualität mittels des Bilddetektors 32, insbesondere einer Farb-CCD-Kamera aufnehmen, sodass ein weiterverarbeitbares Bild 34 entsteht. Dieses kann mit bekannten Bildverarbeitungsverfahren verarbeitet und analysiert werden, sodass die abgebildeten Flaschen 10 detailliert kategorisiert und somit identifiziert werden können. Die Verbesserung der Aufnahmequalität durch Verbesserung der Beleuchtung erlaubt eine detailliertere Kategorisierung als bislang möglich.

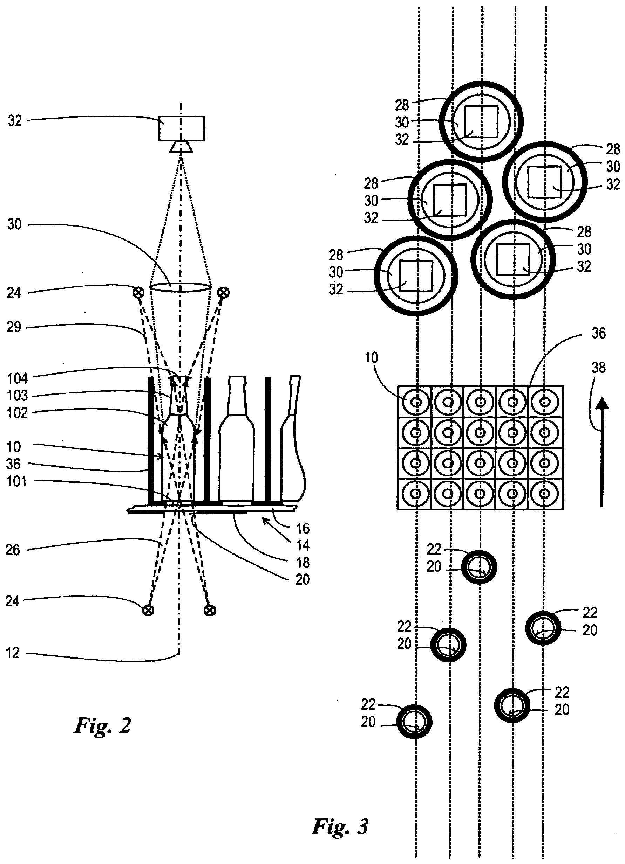

Figur 2 zeigt eine Abwandlung des Systems von Figur 1, die für den Kastenbetrieb erforderlich ist, d.h. für einen Betrieb, in dem die Flaschen 10 nicht einzeln sondern in Flaschenkästen 36 transportiert werden. Als Fördermittel für die Kästen 36 ist wiederum aus den oben bereits erläuterten Gründen ein Klemmförderer besonders geeignet. Da die Böden üblicher Flaschenkästen aus sehr filigranen Streben aufgebaut sind, ergibt sich keine wesentliche Qualitätsverschlechterung der Beleuchtung oder Abbildung. Insbesondere können evtl. mit abgebildete Strebenstrukturen, welche den Flaschenboden 101 im Bereich der Ausnehmung 20 queren, in der Abbildung 34 leicht herausgerechnet werden, falls erforderlich.

Im offensichtlichen Unterschied zur Einzelflaschen-Ausführungsform von Figur 1 sind für den Kastenbetrieb von Figur 2 mehrere Flascheninspektionsstellen erforderlich. Bei einer bevorzugten Ausführungsform, die in Figur 3 skizziert ist, ist für jede Flaschenreihe des Kastens 36 in Transportrichtung 38 eine Flascheninspektionsstelle vorgesehen. Beim gezeigten Ausführungsbeispiel sind somit fünf Flascheninspektionsstellen vorgesehen, die versetzt zueinander angeordnet sind. In Figur 3 ist unterhalb des skizzierten Flaschenkastens 36 die Anordnung der unteren Beleuchtungseinheiten 22 und oberhalb des skizzierten Kastens 36 die oberen Beleuchtungseinheiten 28 dargestellt. Die Darstellung ist jeweils in Draufsicht, wobei die unteren und oberen Beleuchtungseinheiten senkrecht übereinander und koaxial zu denken sind, wie in den Figuren 1 und 2 angedeutet. Bei Betrieb wird der Kasten 36 schrittweise vorgefahren, sodass bei jedem Schritt wenigstens eine Flasche 10 an einer ihr zugeordneten Flascheninspektionsstelle positioniert wird. Zur Vermeidung von "Übersprechen" sind die Flascheninspektionsstellen so zueinander versetzt angeordnet, dass niemals zwei unmittelbar nebeneinander stehende Flaschen gleichzeitig inspiziert werden. Zudem erfolgt die Beleuchtung synchronisiert mit der Aufnahme, d.h. in Form einer Blitzlichtbeleuchtung.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere können Variationen in der Farbwahl der Beleuchtung, der Versetzung und Anzahl der Beleuchtungseinheiten und der Kombination mit weiteren oder anderen Beleuchtungseinheiten je nach Anforderungen des Einzelfalls vorgenommen werden.
Selbstverständlich ist die Erfindung grundsätzlich auch auf andere Leergutbehältnisse als Flaschen anwendbar.

### Bezugszeichenliste

- 10: Flasche
- 101: Flaschenboden
- 102: Flaschenschulter
- 103: Flaschenhals
- 104: Flaschenmündung
- 12: optische Achse
- 14: Inspektionstisch
- 16: Glasplatte
- 18: optisch undurchlässige Verblendung
- 20: Ausnehmung in 18
- 22: untere Beleuchtungseinheit
- 24: LED
- 26: Lichtkegel
- 28: obere Beleuchtungseinheit
- 29: Lichtkegel
- 30: Linse
- 32: Bilddetektor
- 34: Bild
- 36: Flaschenkasten
- 38: Transportrichtung

## Patentansprüche

1. Vorrichtung zur Identifizierung von in einem zu vorgegebenen Kasteninspektionsstellen transportierbaren Flaschenkasten (36) angeordneten Flaschen (10), die dadurch an nach räumlicher Position und axialer Ausrichtung vorgegebenen Flascheninspektionsstellen positionierbar sind, umfassend
- je eine jeder Flascheninspektionsstelle zugeordnete Beleuchtungseinheit (22), welche die jeweilige Flascheninspektionsstelle durch jeweils eine koaxial zu dieser angeordnete, gleichartige Kreisblende (20), die von der zugeordneten Beleuchtungseinheit (22) stammendes Licht eines Kernstrahlbündels, das nicht größer ist als der Durchmesser jeder bestimmungsgemäß identifizierbaren Flasche (10), passieren lässt und Licht außerhalb des Kernstrahlbündels ausblendet, hindurch flaschenbodenseitig beleuchtet,
- jeweils einen flaschenmündungsseitig jeder Flascheninspektionsstelle angeordneten Bilddetektor (32), mittels dessen ein eine Draufsicht auf die jeweilige Flascheninspektionsstelle repräsentierendes Bild aufnehmbar ist, und
- eine Bildverarbeitungseinheit, die eingerichtet ist, durch Vergleich von Bildinformationsinhalten jedes Bildes mit gespeicherten Werten eine Kategorisierung der jeweiligen Flascheninspektionsstelle oder - falls vorhanden - einer dort positionierten Flasche (10) nach vorgegebenen Kriterien vorzunehmen,
wobei für jede Flaschenreihe des Flaschenkastens (36) in dessen Transportrichtung (38) eine Flascheninspektionsstelle vorgesehen ist und die Flascheninspektionsstellen zueinander derart versetzt angeordnet sind, dass niemals zwei unmittelbar nebeneinander stehende Flaschen gleichzeitig inspizierbar sind.

2. Vorrichtung nach Anspruch 1,
**dadurch gekennzeichnet,**
**dass** der Durchmesser jeder Kreisblende 0% bis 20% kleiner als der Bodendurchmesser jeder bestimmungsgemäß identifizierbaren Flasche (10) ist.

3. Vorrichtung nach einem der vorangehenden Ansprüche,
**dadurch gekennzeichnet,**
**dass** der Kreisblendendurchmesser jeder Kreisblende einstellbar ist.

4. Vorrichtung nach einem der vorangehenden Ansprüche,
**dadurch gekennzeichnet,**
**dass** jede Beleuchtungseinheit (22) eine Mehrzahl ringförmig angeordneter Leuchtmittel (24) aufweist.

5. Vorrichtung nach Anspruch 4,
**dadurch gekennzeichnet,**
**dass** die Leuchtmittel (24) jeder Beleuchtungseinheit einen schräg nach radial innen geneigten Strahlungskegel (26) erzeugen.

6. Vorrichtung nach einem der vorangehenden Ansprüche,
**dadurch gekennzeichnet,**
**dass** jede Beleuchtungseinheit als LEDs (24) ausgebildete Leuchtmittel aufweist.

## Claims

1. An apparatus for identifying bottles (10) arranged in a bottle crate (36) that can be transported to determined bottle inspection points, designed such that said bottles can be positioned in a determined spatial position and axial alignment at defined bottle inspection points comprising,
- an illumination unit (22) assigned to each bottle inspection point, said illumination unit illuminating the bottle inspection point from the bottle bottom through a circular aperture (20) of a similar kind arranged coaxially with respect to it which lets pass the light of a core ray bundle coming from the illumination unit (22) assigned to it, said core ray bundle having a diameter no greater than that of each bottle (10) identifiable as defined, and blocks out the light outside the core ray bundle,
- one image detector (32) arranged on the bottle mouth side at each bottle inspection point, the image detector being designed to capture an image representing the respective top view of the bottle inspection point; and
- an image processing unit designed to categorize, according to stored criteria, the respective bottle inspection point or - if present - a bottle (10) positioned there, by comparing the image information content of each image with stored values,
wherein a bottle inspection point is provided for each row of bottles in the bottle crate (36) in its direction of travel (38) and that the bottle inspection points are offset with respect to one another in such a way that never two bottles standing in close proximity can be inspected simultaneously.

2. The apparatus according to Claim 1,
**characterized in that**
the diameter of each circular aperture is 0% to 20% less than the diameter of the bottom of any bottle (10) identifiable according to the intended use.

3. The apparatus according to any of the preceding claims,
**characterized in that**
the diameter of each circular aperture can be adjusted.

4. The apparatus according to any of the preceding claims,
**characterized in that**
each illumination unit (22) has a plurality of light sources (24) arranged in the shape of a ring.

5. The apparatus according to Claim 4,
**characterized in that**
the light sources (24) generate a radiation cone radially tilted towards the interior.

6. The apparatus according to any of the preceding claims,
**characterized in that**
the light sources in each illumination unit are LEDs (24).

## Revendications

1. Appareil pour identifier de bouteilles (10) disposées dans une caisse à bouteilles (36) pouvant être transportée à des points d'inspection de bouteilles déterminés, conçu de sorte que lesdites bouteilles peuvent être disposées dans une position spatiale et selon un alignement axial déterminés à des points d'inspection de bouteille précis, comprenant
- une unité d'éclairage (22) affectée à chaque point d'inspection de bouteille, ladite unité d'éclairage éclairant le point d'inspection de bouteille à partir du fond de la bouteille à travers un diaphragme circulaire (20) du même type disposé coaxialement par rapport audit point d'inspection de bouteille et qui laisse passer la lumière d'un faisceau de rayon central venant de l'unité d'éclairage (22) à laquelle elle est affectée, ledit faisceau de rayon central ayant un diamètre ne dépassant pas celui de chaque bouteille (10) identifiable comme défini, et bloque la lumière à l'extérieur du faisceau de rayon central,
- un détecteur d'image (32) disposé du côté du goulot de la bouteille au point d'inspection de bouteille, moyennant duquel une image représentant une vue de dessus du point d'inspection de bouteille est captée;
- une unité de traitement d'image, configurée pour classer, selon des critères prédéfinis, le point d'inspection de bouteille ou - s'il y en a - une bouteille (10) qui y est placée, en comparant le contenu des informations de chaque image avec des valeurs sauvegardées;
un point d'inspection de bouteille étant prévu pour chaque rangée de bouteilles dans la caisse à bouteilles (36) dans son sens de déplacement (38) et les points d'inspection de bouteille étant décalés les uns par rapport aux autres de sorte que deux bouteilles très proches ne peuvent pas être inspectées simultanément.

2. Appareil selon la revendication 1,
**caractérisé en ce que**
le diamètre de chaque diaphragme circulaire est de 0% à 20% inférieur au diamètre de base de n'importe quelle bouteille (10) identifiable selon l'utilisation prévue.

3. Appareil selon l'une des revendications précédentes,
**caractérisé en ce que**
le diamètre de chaque diaphragme circulaire peut être ajusté.

4. Appareil selon une quelconque des revendications précédentes,
**caractérisé en ce que**
chaque unité d'éclairage (22) comporte une pluralité de sources de lumière (24) disposées en forme d'anneau.

5. Appareil selon la revendication 4,
**caractérisé en ce que**
les sources de lumière (24) de chaque unité d'éclairage génèrent un cône de rayonnement incliné radialement vers l'intérieur.

6. Appareil selon une quelconque des revendications précédentes,
**caractérisé en ce que**
les sources de lumière dans chaque unité d'éclairage sont des DEL (24).
